(19) Europäisches Patentamt
European Patent Office
Office européen des brevets

(11) **EP 1 777 465 A2**

(12) **EUROPÄISCHE PATENTANMELDUNG**

(43) Veröffentlichungstag:
**25.04.2007 Patentblatt 2007/17**

(51) Int Cl.:
**F24D /** (2006.01)

(21) Anmeldenummer: 06122140.4

(22) Anmeldetag: **11.10.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **18.10.2005 DE 102005051203**

(71) Anmelder: **DLR Deutsches Zentrum für Luft- und Raumfahrt e.V.**
**51147 Köln (DE)**

(72) Erfinder: **Faragó, Zoltán**
**74747, Ravenstein (DE)**

(74) Vertreter: **Hoeger, Stellrecht & Partner**
**Patentanwälte**
**Uhlandstrasse 14 c**
**70182 Stuttgart (DE)**

(54) **Verfahren zur Bestimmung des Heizwärmebedarfs eines Gebäudes**

(57)     Um ein Verfahren zur Bestimmung des Heizwärmebedarfs eines Gebäudes mit einem Heizungssystem, bei dem zeitabhängige Parameter ermittelt werden, welche den Heizwärmebedarf beeinflussen oder mit Parametern, die den Heizwärmebedarf beeinflussen, korreliert sind, und aus den ermittelten Parametern der Heizwärmebedarf berechnet wird, wobei die Außentemperatur als Parameter, welcher den Heizwärmebedarf beeinflusst, ermittelt wird und in die Berechnung des Heizwärmebedarfs die Differenz zwischen Raumtemperatur und Außentemperatur eingeht, bereitzustellen, mittels welchem sich der Heizwärmebedarf eines Heizungssystems auf einfache und zuverlässige Weise ermitteln lässt, ist vorgesehen, dass mindestens einer der Parameter Windgeschwindigkeit, Sonnenscheindauer, Brauchwasserverbrauch, zeitliche Änderung der Außentemperatur, Auslastung des Heizungssystems zeitabhängig ermittelt wird und dass eine von dem mindestens einen Parameter und der Differenz zwischen Raumtemperatur und Außentemperatur abhängige Größe ($\Delta T_{g, mod}$) bestimmt wird, mit welcher der Heizwärmebedarf berechnet wird.

FIG.1

EP 1 777 465 A2

**Beschreibung**

Die Erfindung betrifft ein Verfahren zur Bestimmung des Heizwärmebedarfs eines Gebäudes mit einem Heizungssystem, bei dem zeitabhängige Parameter ermittelt werden, welche den Heizwärmebedarf beeinflussen oder mit Parametern, die den Heizwärmebedarf beeinflussen, korreliert sind, und aus den ermittelten Parametern der Heizwärmebedarf berechnet wird, wobei die Außentemperatur als Parameter, welcher den Heizwärmebedarf beeinflusst, ermittelt wird und in die Berechnung des Heizwärmebedarfs die Differenz zwischen Raumtemperatur und Außentemperatur eingeht.

Die Erfindung betrifft ferner ein Verfahren zur Heizungsregelung.

Weiterhin betrifft die Erfindung eine Heizungsregelungsvorrichtung.

Aus der EP 1 215 445 A2 ist ein Verfahren zur Ermittlung des Nennwärmebedarfs eines Heizungssystems mit einer Wärmequelle bekannt, bei dem zeitabhängig eine Außentemperatur gemessen wird und zeitabhängig eine für eine Energieabgabe der Wärmequelle an das Heizungssystem charakteristische Größe gemessen wird und aus den gemessenen Werten der Nennwärmebedarf berechnet wird, wobei mindestens so lange gemessen wird, bis das Verhältnis eines ermittelten maximalen Nennwärmebedarfs zu einem ermittelten minimalen Nennwärmebedarf größer als ein vorgegebener Wert ist, wobei dieser vorgegebene Wert größer als Eins ist.

Ferner ist aus der EP 1 215 445 A2 eine Messvorrichtung zur Bestimmung des Nennwärmebedarfs eines Heizungssystems bekannt, welche eine Uhr zur Ermöglichung zeitabhängiger Messungen, einen Außentemperaturfühler, eine Messeinrichtung zur Messung der Energieabgabe einer Wärmequelle des Heizungssystems, einen Datenspeicher zur Speicherung von Messresultaten und eine Auswerteeinheit zur Berechnung des Nennwärmebedarfs umfasst. Die Messvorrichtung ist so ausgebildet, dass durch sie mindestens so lange die Messgrößen automatisch messbar und auswertbar sind, bis ein Verhältnis eines ermittelten maximalen Nennwärmebedarfs zu einem minimalen Nennwärmebedarf größer als ein voreingestellter Wert ist.

Der Wirkungsgrad bzw. Jahresnutzungsgrad von Heizungssystemen verschlechtert sich mit zunehmenden Verhältnis der Heizleistung zum aktuellen Wärmebedarf. Die Heizleistung (Heizwärmebedarf, Nennwärmebedarf) ist der höchstmögliche Wärmebedarf, der aktuelle Wärmebedarf ist die momentane Wärmeabgabe des Heizungssystems. Beispielsweise liegt der Jahresnutzungsgrad überdimensionierter ölbefeuerter oder gasbefeuerter Zentralheizungen bei weniger als 60 %, während richtig dimensionierte Heizungssysteme einen Nutzungsgrad von mehr als 80 % aufweisen.

Bei einer Reduzierung der Brennerleistung steigt der Wirkungsgrad des Heizungssystems beträchtlich. Es tritt jedoch dann die Gefahr auf, dass, wenn die Brennerleistung zu stark verkleinert wird, bei niedrigen Außentemperaturen der Wärmebedarf nicht mehr abgedeckt werden kann und eine vorgegebene Raumtemperatur nicht mehr erreichbar ist. Bei einer Reduzierung der Brennerleistung sollte diese deshalb nicht so weit reduziert werden, als es dem Heizwärmebedarf entspricht.

In der Praxis tritt oft das Problem auf, dass der Heizwärmebedarf eines Heizungssystems überschätzt wird, um die Gefahr einer nicht genügenden Heizbarkeit von Räumen auszuschließen. Dadurch ergibt sich ein Wirkungsgrad des Heizungssystems, der deutlich schlechter ist, als wenn die Brennerleistung richtig angepasst wäre.

Ist der Heizwärmebedarf (Nennwärmebedarf) bekannt, dann lässt sich die Auslegung des Heizungssystems so anpassen (beispielsweise durch Reduzierung der Brennerleistung), dass der Wirkungsgrad des Heizungssystems optimiert ist.

Der Erfindung liegt die Aufgabe zugrunde, ein Verfahren der eingangs genannten Art bereitzustellen, mittels welchem sich der Heizwärmebedarf eines Heizungssystems auf einfache und zuverlässige Weise ermitteln lässt.

Diese Aufgabe wird bei dem eingangs genannten Verfahren erfindungsgemäß dadurch gelöst, dass mindestens einer der Parameter Windgeschwindigkeit, Sonnenscheindauer, Brauchwasserverbrauch, zeitliche Änderung der Außentemperatur, Auslastung des Heizungssystems zeitabhängig ermittelt wird und dass eine von dem mindestens einen Parameter und der Differenz zwischen Raumtemperatur und Außentemperatur abhängige Größe ($\Delta T_{g,\,mod}$) bestimmt wird, mit welcher der Heizwärmebedarf berechnet wird.

Wenn mindestens einer dieser Parameter zeitabhängig ermittelt wird, dann kann er bei der Berechnung des Heizwärmebedarfs auch berücksichtigt werden. Dadurch ergeben sich genauere Werte. Dadurch wiederum ist es möglich, kürzere Parameterermittlungsperioden und insbesondere kürzere Messperioden zu erhalten.

Beispielsweise hat die Windgeschwindigkeit bei schlecht isolierten Gebäuden einen starken Einfluss, während er bei guter Wärmedämmung eher kleiner ist. Insbesondere bei Passivhäusern hat eine direkte Sonneneinstrahlung einen sehr relevanten Einfluss. Wenn an einer Südseite bzw. Westseite eines Gebäudes keine Fenster vorhanden sind, dann ist der Einfluss des Parameters Sonnenscheindauer eher geringer. Insbesondere bei mehrtägigen Messungen an einem Gebäude ist es in der Regel nicht vermeidbar, dass eine Warmwasserzubereitung erfolgt. Diese kann, wenn sie nicht berücksichtigt wird, zu einem falsch berechneten Heizwärmebedarf führen.

Durch Berücksichtigung mindestens eines der Parameter lässt sich eine optimierte Anpassung an die gegebenen Verhältnisse durchführen. Dadurch lässt sich das Verfahren bei einer Vielzahl von Situationen (Klimazonen, Gebäudetypen usw.) einsetzen, wobei sich kurze Messzeiten erhalten lassen.

In die Formel zur Berechnung des Heizwärmebedarfs geht die Differenz zwischen Raumtemperatur und Außentemperatur ein. Bei der erfindungsgemäßen Lösung wird diese Differenz modifiziert, wobei die Modifikation von dem mindestens einen Parameter abhängig ist. Dadurch lassen sich bestimmte Einflüsse (insbesondere Wind und/oder Sonnenscheindauer und/oder Brauchwasserverbrauch und/oder zeitliche Änderung der Außentemperatur) systematisch (und nicht nur stochastisch) berücksichtigen. Dies wiederum ermöglicht es, den Heizwärmebedarf mit guter Genauigkeit zu bestimmen, indem eine Messreihe für eine bestimmte Zeitdauer (die vorgegeben bzw. bekannt ist) aufgenommen wird und dann aus den erhaltenen Messwerten der Heizwärmebedarf bestimmt wird. Bei dem aus der EP 1 215 445 A2 bekannten Verfahren ist der Zeitraum, in dem Messwerte aufgenommen werden müssen, von vornherein nicht bekannt, da bestimmte Einflüsse wie beispielsweise Wind höchstens stochastisch aber nicht systematisch erfasst werden.

Die Parameterabhängigkeit von $\Delta T_{g,\,mod}$ kann analytisch bekannt sein oder beispielsweise über Regressionskoeffizienten bekannt sein, die zuvor über Kalibrierungsmessungen ermittelt wurden. Die Kalibrierungsmessungen können beispielsweise gemäß dem in der EP 1 215 445 A2 beschriebenen Verfahren durchgeführt worden sein. Sie müssen aber nicht für jedes Messobjekt individuell durchgeführt werden. Beispielsweise genügen Kalibrierungsmessungen für einen bestimmten Haustyp und/oder eine bestimmte Hauslage.

Wenn die Auslastung des Heizungssystems bekannt ist, dann lässt sich die Größe $\Delta T_{g,\,mod}$ mit wenigen Messungen ermitteln. Grundsätzlich reicht eine einzige Tagesmessung oder sogar eine Messung in einem kürzeren Zeitintervall als einem Tag aus.

Es kann auch vorgesehen sein, dass der Parameter Temperaturunterschied zwischen Tageshöchsttemperatur und Tagesmindesttemperatur zeitabhängig ermittelt wird und bei der Bestimmung der Größe berücksichtigt wird.

Ein weiterer möglicher Parameter ist der Druckunterschied zwischen barometrischem Tageshöchstdruck und Tagesmindestdruck. Dieser Parameter wird beispielsweise zeitabhängig ermittelt und bei der Bestimmung der Größe berücksichtigt.

Es ist auch möglich, dass der Parameter Tageslänge zeitabhängig ermittelt wird und bei der Bestimmung der Größe berücksichtigt wird.

Insbesondere wird die Tageslänge als Zeitdifferenz zwischen dem Zeitpunkt des Sonnenuntergangs und des Sonnenaufgangs ermittelt.

Es kann vorteilhaft sein, wenn die zeitliche Änderung der Außentemperatur auf einen oder mehrere Vortage bezogen wird.

Insbesondere wird dann als Parameter die zeitliche Änderung der Außentemperatur zu einem Vortag und als mindestens einen weiteren Parameter die zeitliche Änderung der Außentemperatur zu einem anderen Vortag ermittelt und die Parameter werden bei der Ermittlung der Größe berücksichtigt. Es hat sich gezeigt, dass, wenn nicht nur der nächstliegende Vortag sondern auch weiter vorausgehende Vortage berücksichtigt werden, man ein gutes Ergebnis erhält.

Ganz besonders vorteilhaft ist es, wenn die zeitliche Änderung der Außentemperatur ermittelt wird. Die zeitliche Änderung der Außentemperatur (d. h. insbesondere die Variation der Außentemperatur über mindestens zwei Tage) kann ein relevanter Einflussfaktor sein. Insbesondere bei Massivgebäuden mit dicken Wänden können die Wände als Wärmespeicher funktionieren. Durch die Berücksichtigung der zeitlichen Änderung der Außentemperatur kann der entsprechende Einfluss erfasst werden. Es wird erwartet, dass die Bedeutung der zeitlichen Änderung der Außentemperatur bei Gebäuden in Leichtbauweise geringer ist.

Es ist auch möglich, dass mindestens einer der Parameter Windrichtung, Bewölkung, Nebel, Niederschlagsart, barometrischer Druck, zeitliche Änderung des barometrischen Drucks, Luftfeuchtigkeit und NAO-Index zeitabhängig ermittelt wird. Der mindestens eine erfasste Parameter lässt sich dann auch bei der Berechnung des Heizwärmebedarfs berücksichtigen. Dadurch kann die Genauigkeit der Bestimmung des Heizwärmebedarfs unter Umständen erhöht werden.

Es kann vorgesehen sein, dass die Parameter vor Ort gemessen werden und/oder von einer oder von mehreren Datenbanken abgefragt werden. Beispielsweise werden entsprechende Parameter von einem Wetterdienst abgefragt.

Insbesondere ist die kleinste Zeiteinheit zur Berechnung des Heizwärmebedarfs ein 24-Stunden-Tag. Es ist dabei möglich, dass ein Parameter mehrmals am Tag ermittelt wird und ein entsprechender ungewichteter oder gewichteter Mittelwert für den Tag bereitgestellt wird. Es ist auch möglich, dass ein entsprechender Parameter nur einmal am Tag ermittelt wird. Beispielsweise ist es üblicherweise ausreichend, den Brauchwasserverbrauch über den ganzen Tag aufzusummieren.

Günstig ist es, wenn ein Tag zur Berechnung des Heizwärmebedarfs nur dann herangezogen wird, wenn eine vorgegebene mittlere Tagestemperatur für den Tag oder für eine Gruppe von Tagen, in denen der Tag liegt, unterschritten wird. Insbesondere liegt diese vorgegebene mittlere Tagestemperatur unterhalb von 15°C. Beispielsweise wird ein Tag nicht herangezogen, wenn er und/oder sein Vortag diese vorgegebene mittlere Tagestemperatur überschreiten. Dadurch lässt sich die Genauigkeit erhöhen, da für den Heizwärmebedarf "nicht-relevante" Tage nicht berücksichtigt werden.

Es kann vorgesehen sein, dass die Brauchwasserentnahme gemessen wird. Dadurch lässt sich auf einfache Weise die Warmwasserzubereitung berücksichtigen.

Es ist auch möglich, dass die Brauchwasserentnahme abgeschätzt wird. Beispielsweise werden für die Brauchwasserentnahme Kategorien aufgestellt wie "sehr gering", "unterdurchschnittlich", "durchschnittlich" und "überdurchschnittlich". Die entsprechenden Parameter können dann direkt eingegeben werden, ohne dass eine Messung notwendig ist.

Insbesondere wird der Heizwärmebedarf nach einer Ermittlung von Parametern über mindestens einen Tag berechnet. Dadurch ergibt sich ein Nennwärmebedarf mit guter Genauigkeit. Wenn der Zusammenhang zwischen $\Delta T_{g, mod}$ und dem mindestens einen Parameter bekannt ist, genügen kurze Messzeitintervalle.

Es hat sich als günstig erwiesen, wenn Parameter über mindestens zwei Tage ermittelt werden und insbesondere über mindestens sieben Tage ermittelt werden. Es lassen sich dabei auch kurze Ermittlungszeiträume erhalten.

Insbesondere werden zur Ermittlung einer zeitlichen Änderung eines Parameters bezogen auf einen Bezugstag die entsprechenden Parameter eines oder mehrerer Vortage berücksichtigt. Es ist dabei insbesondere vorgesehen, dass die Änderung der Außentemperatur dadurch berücksichtigt wird, dass auch die Außentemperaturen eines oder mehrerer Vortage berücksichtigt werden.

Es kann vorgesehen sein, dass ein Parametermittelwert für einen Bezugstag und den oder die Vortage gebildet wird.

Beispielsweise wird ein Zwei-Tage-Parametermittelwert oder Drei-Tage-Parametermittelwert gebildet.

Der Heizwärmebedarf N wird vorzugsweise aus der Beziehung

$$N = \Gamma \cdot H \, \Delta T_a / (\Delta t \cdot \Delta T_{g, mod})$$

berechnet, wobei $\Gamma$ ein Brennstoffverbrauch einer Wärmequelle des Heizungssystems im Zeitintervall $\Delta t$ ist, H die Verbrennungswärme ist, $\Delta T_{g, mod}$ ein Maß für die Differenz zwischen Raumtemperatur und Außentemperatur ist, welche abhängig von dem mindestens einen Parameter ist, und $\Delta T_a$ die Differenz ist zwischen der Raumtemperatur und einer vorgegebenen Auslegungstemperatur. Die vorgegebene Auslegungstemperatur ist beispielsweise diejenige Temperatur, die in den letzten Jahren 20 Mal oder zehn Mal für eine bestimmte Zeitdauer unterschritten wurde. Sie kann auch definiert werden als die Temperatur, die im Winter zu einem bestimmten Prozentsatz überschritten wird (beispielsweise 99 %, 97,5 % oder 95 %). Über den effektiven Brennstoffverbrauch lassen sich die ermittelten Parameter, die nicht direkt in die Formel eingehen, berücksichtigen, indem entsprechende Ansätze wie ein Summenansatz oder ein Produktansatz gemacht wird. Über vieldimensionale Regression lässt sich dann eine Anpassung durchführen.

Insbesondere ist $\Delta T_{g, mod}$ die Differenz zwischen Raumtemperatur und Außentemperatur korrigiert um eine parameterabhängige Temperatur $T_{mod}$:

$$\Delta T_{g, mod} = T_{raum} - T_{außen} + T_{mod}.$$

$T_{mod}$ ist abhängig von dem mindestens einen Parameter und wird beispielsweise über eine Regressionsgleichung systematisch bestimmt.

Beispielsweise weist der Brennstoffverbrauch ein Anteil eines Brennstoffverbrauchs bei Standardbedingungen und einen Korrekturanteil auf, welcher mittels ermittelter Parameter bestimmt wird. Der Brennstoffverbrauch bei Standardbedingungen ist insbesondere der Brennstoffverbrauch, wenn die Windgeschwindigkeit unterhalb eines niedrigen Schwellenwerts liegt, die Sonnenscheindauer Null ist, keine Änderung der Außentemperatur über mindestens ein Tag vorliegt und keine Niederschläge und auch kein Nebel vorliegt. Der Korrekturanteil enthält dann den Einfluss der weiteren Parameter.

Beispielsweise wird der Einfluss der ermittelten Parameter durch einen Faktor und/oder einen Summanden bezogen auf den Heizwärmebedarf bei Normalbedingungen berücksichtigt. Insbesondere über Regression lässt sich dieser Einfluss berücksichtigen.

Bei einem Ausführungsbeispiel wird ein Brennstoffverbrauch zeitabhängig ermittelt und eine Regressionsanpassung mittels mindestens zwei Parametern durchgeführt, bei welcher Regressionskoeffizienten bestimmt werden, und über die Regressionskoeffizienten und die Parameter wird die Größe $\Delta T_{g, mod}$ ermittelt. Dadurch lässt sich auf einfache Weise eine effektive Außentemperatur bzw. eine effektive Differenz zwischen Raumtemperatur und Außentemperatur ermitteln. Bei bekannten Regressionskoeffizienten lässt sich dann die Größe $\Delta T_{g, mod}$ auf einfache Weise aus Messung bzw. anderer Ermittlung der Parameter berechnen.

Günstigerweise werden mindestens zwei Parameter und der Brennstoffverbrauch mindestens näherungsweise zeitgleich ermittelt. Dadurch erhält man bei Durchführung einer Regressionsanpassung eine relativ gute Genauigkeit.

Die Regressionsanpassung lässt sich auf einfache Weise durchführen, wenn diese linear ist. Insbesondere wird eine lineare Abhängigkeit zwischen dem Brennstoffverbrauch und den zugrunde gelegten Parametern angesetzt.

Günstig ist es, wenn eine Brennerleistung eines Brenners des Heizungssystems und der bestimmte Heizwärmebedarf verglichen werden, um zu prüfen, ob eine Überdimensionierung des Brenners vorliegt. Bei einer Überdimensionierung, welche mittels des erfindungsgemäßen Verfahrens auf einfache Weise feststellbar ist, lässt sich das Heizungssystem durch "Drosselung" optimieren, um einen höheren Wirkungsgrad zu erreichen.

Der Erfindung liegt ferner die Aufgabe zugrunde, ein Verfahren zur effektiven und komfortablen Heizungsregelung bereitzustellen.

Diese Aufgabe wird erfindungsgemäß dadurch gelöst, dass die Führungsgröße für die Heizungsregelung eine effektive Außentemperatur ist, welche mittels der tatsächlichen Außentemperatur und mittels mindestens einem der Parameter Windgeschwindigkeit, Sonnenscheindauer, Brauchwasserverbrauch, zeitliche Änderung der Außentemperatur oder Auslastung des Heizungssystems berechnet wird.

Das erfindungsgemäße Verfahren zur Heizungsregelung steht in enger Verwandtschaft mit dem erfindungsgemäßen Verfahren zur Ermittlung des Heizwärmebedarfs. Die dort erwähnte Größe $\Delta T_{g,\,mod}$ und die effektive Außentemperatur unterscheiden sich nur um einen festen Summanden, nämlich die Raumtemperatur $T_{raum}$. Die beschriebenen Methoden zur Ermittlung der Größe $\Delta T_{g,\,mod}$ lassen sich zur Bestimmung der effektiven Außentemperatur auf die gleiche Weise anwenden.

Durch das erfindungsgemäße Verfahren zur Heizungsregelung erhält man eine komfortable und wirkungsvolle Regelung. Anstatt der tatsächlichen Außentemperatur wird eine "gefühlte Temperatur", nämlich die effektive Außentemperatur als Führungsgröße verwendet. Diese berücksichtigt weitere Faktoren als nur die Außentemperatur. Sie wird insbesondere zeitabhängig ermittelt. Dadurch erhält man insbesondere auch am Anfang und Ende einer Heizperiode genauere Regelungsergebnisse.

Insbesondere wird mittels der Führungsgröße die Heizungsvorlauftemperatur geregelt. Die Heizkurve des entsprechenden Heizungssystems wird dann als Funktion der effektiven Außentemperatur angesehen (und nicht als Funktion der tatsächlichen Außentemperatur). Die effektive Außentemperatur enthält beispielsweise den Einfluss von Witterungsbedingungen.

Weitere vorteilhafte Ausgestaltungen des erfindungsgemäßen Heizungsregelungsverfahrens wurden bereits im Zusammenhang mit dem erfindungsgemäßen Verfahren zur Bestimmung des Heizwärmebedarfs erläutert.

Insbesondere ist es günstig, wenn die effektive Außentemperatur bei bekannter Auslastung ermittelt wird als

$$T_{a,\,eff} = T_{raum} - (T_{raum} - T_{außen}) \bullet \text{Auslastung}$$

Die effektive Außentemperatur lässt sich mit wenigen Messungen ermitteln, wobei grundsätzlich eine einzige Tagesmessung ausreicht oder sogar eine Messung in einem noch kürzeren Zeitintervall. Man braucht dann keine Koeffizienten beispielsweise über Regression ermitteln, sofern die Auslastung des Heizungssystems bekannt ist. Beispielsweise kann die Heizkurve des entsprechenden Heizungssystems als Funktion der Auslastung angesehen werden.

Der Erfindung liegt ferner die Aufgabe zugrunde, eine Heizungsregelungsvorrichtung bereitzustellen, welche eine wirkungsvolle und komfortable Regelung ermöglicht.

Diese Aufgabe wird erfindungsgemäß dadurch gelöst, dass die Heizungsregelungsvorrichtung eine Auswertungseinrichtung zur Berechnung der effektiven Außentemperatur, eine erste Schnittstelleneinrichtung, über welche die effektive Außentemperatur bestimmte Parameter einlesbar und der Auswertungseinrichtung zuführbar sind, und eine zweite Schnittstelleneinrichtung, über welche eine oder mehrere Wärmequellen eines Heizungssystems ansteuerbar sind, umfasst.

Über die erfindungsgemäße Heizungsregelungsvorrichtung lässt sich das erfindungsgemäße Verfahren zur Heizungsregelung durchführen. Die Auswertungseinrichtung bestimmt die effektive Außentemperatur, welche als Führungsgröße für die Heizungsregelung dient. Zur Bestimmung der effektiven Außentemperatur werden entsprechende Parameter eingelesen. Diese werden gemessen und/oder stammen aus Datenbanken. In der Auswertungseinrichtung sind die Informationen über die entsprechenden Gleichungen zur Berechnung der effektiven Außentemperatur aus diesen Parametern gespeichert.

Die erfindungsgemäße Heizungsregelungsvorrichtung weist die bereits im Zusammenhang mit dem erfindungsgemäßen Heizungsregelungsverfahren erläuterten Vorteile auf.

Beispielsweise sind eine oder mehrere Messeinrichtungen für Parameter, welche die effektive Außentemperatur bestimmen, an die erste Schnittstelleneinrichtung angeschlossen. Dadurch können die entsprechenden Parameterwerte der Auswertungseinrichtung bereitgestellt werden.

Es ist alternativ oder zusätzlich möglich, dass die erste Schnittstelleneinrichtung an eine Datenbank angeschlossen ist oder so ausgebildet ist, dass sie an eine Datenbank anschließbar ist, und die effektive Außentemperatur bestimmte Parameter von der Datenbank entnehmbar sind. Beispielsweise können entsprechende Parameter aus einer Wetterdatenbank entnommen werden.

Es kann dabei vorgesehen sein, dass diese Schnittstelleneinrichtung an das Internet anschließbar ist, um die entsprechenden Daten zu erhalten.

Die nachfolgende Beschreibung bevorzugter Ausführungsformen dient im Zusammenhang mit der Zeichnung der näheren Erläuterung der Erfindung. Es zeigen:

Figur 1     eine schematische Darstellung eines Gebäudes mit einem Heizungssystem und einer Vorrichtung, mit welcher der Heizwärmebedarfs des Gebäudes ermittelbar ist;

Figur 2     ein Diagramm der Außentemperatur über eine Mehrzahl von Versuchstagen, wobei auch das Ergebnis eines berechneten Heizwärmebedarfs eingezeichnet ist. Die Außentemperatur ist eine mittlere Tagestemperatur. Der Heizwärmebedarf wurde dabei als Maximalwert einer siebentägigen Ermittlungsserie berechnet;

Figur 3     ein Messdiagramm des gemessenen Heizölverbrauchs bezogen auf die Außentemperatur an einem Einfamilienhaus;

Figur 4     die Größe $\Delta T_{g, mod}$ (bezogen auf die Raumtemperatur $T_{raum}$) als Funktion der Außentemperatur, welche gemäß dem erfindungsgemäßen Verfahren unter Zugrundelegung eines gemessenen Brennstoffverbrauchs berechnet wurde; und

Figur 5     eine schematische Darstellung eines Ausführungsbeispiels einer erfindungsgemäßen Heizungsregelungsvorrichtung.

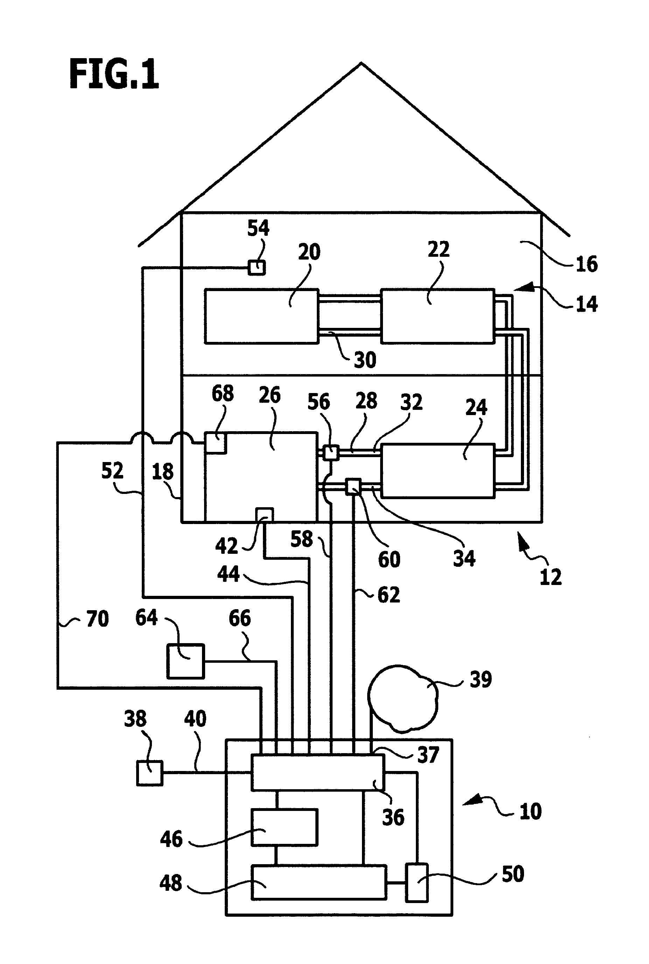

Eine Vorrichtung, welche in Figur 1 als Ganzes mit 10 bezeichnet ist, dient zur Ermittlung und insbesondere automatischen Ermittlung des Heizwärmebedarfs (Nennwärmebedarfs) eines Gebäudes 12 mit einem Heizungssystem 14. Sie kann auch zur Kalibrierung und insbesondere der Ermittlung von Kalibrierungskoeffizienten eingesetzt werden.

Das Haus weist Räume 16, 18 auf, welche mit einem oder mehreren Heizkörpern 20, 22, 24 versehen sind. Das Heizungssystem 14 weist eine Wärmequelle 26 wie beispielsweise einen Ölbrenner oder einen Gasbrenner auf. Die Wärmequelle 26 erwärmt ein Wärmetauschmedium (insbesondere Wasser), und dieses Wärmetauschmedium gibt seine Wärme über die Heizkörper 20, 22, 24 an die Räume 16, 18 ab.

Das Heizungssystem 14 hat einen Vorlauf 28, mit dem erwärmtes Wärmetauschmedium den Heizkörpern 24, 22, 20 zugeführt wird. Ferner hat es einen Rücklauf 30, mit dem abgekühltes Wärmetauschmedium zurückgeführt wird. Beispielsweise weist der Vorlauf 28 eine Vorlaufsammelleitung 32 und der Rücklauf 30 eine Rücklaufsammelleitung 34 auf.

Die Vorrichtung 10 umfasst eine Schnittstelleneinrichtung 36, über welche extern ermittelte Parameter in die Vorrichtung 10 einkoppelbar sind. Die Parameter können vor Ort gemessen werden oder auch durch eine Datenbank wie der Datenbank eines Wetterdienstes bereitgestellt werden. Beispielsweise umfasst die Schnittstelleneinrichtung 36 einen oder mehrere Anschlüsse 37 an ein Netzwerk 39 wie beispielsweise das Internet. Über den oder die Anschlüsse 37 können Daten von einem Server heruntergeladen werden.

Es ist beispielsweise möglich, dass an die Schnittstelleneinrichtung 36 ein Außentemperaturfühler 38 über eine Verbindungsleitung 40 angekoppelt ist. Es kann vorgesehen sein, dass mit der Schnittstelleneinrichtung 36 eine Messeinrichtung 42 über eine Leitung 44 verbunden ist, welche die Energieabgabe der Wärmequelle 26 an das Heizungssystem 14 misst. Beispielsweise misst die Messeinrichtung 42 den Ölverbrauch oder Gasverbrauch, wenn die Wärmequelle 26 ein Ölbrenner bzw. Gasbrenner ist. Es kann auch alternativ oder zusätzlich vorgesehen sein, dass die Messeinrichtung 42 die Leistung der Wärmequelle 26 misst und Einschaltzeiten und Ausschaltzeiten ermittelt, um so die Energieabgabe der Wärmequelle 26 an das Heizungssystem 14 bestimmen zu können.

Ferner umfasst die Vorrichtung 10 eine Uhr 46 bzw. einen Taktgeber, um eine zeitabhängige Messung insbesondere der Außentemperatur über den Messfühler 38 und des Energieverbrauchs der Wärmequelle 26 durchführen zu können. Vorzugsweise steuert die Uhr 46 die zeitliche Erfassung und auch Auswertung der entsprechenden Parameter.

Der Vorrichtung 10 ist eine Auswerteeinheit 48 zugeordnet, welche aus den über die Schnittstelleneinrichtung 36 angekoppelten Parameter einen Heizwärmebedarf berechnet. Die Auswerteeinheit 48 kann in demselben Gehäuse wie die Schnittstelleneinrichtung 36 angeordnet sein oder außerhalb davon. Beispielsweise ist die Auswerteeinheit 48 durch einen PC gebildet.

Die Vorrichtung 10 umfasst einen Datenspeicher 50, in welchem über die Schnittstelleneinrichtung 36 eingekoppelte Parameter speicherbar sind.

Bei einer Variante einer Ausführungsform ist es noch vorgesehen, dass die Schnittstelleneinrichtung 36 über eine Leitung 52 mit einem Temperaturfühler 54 verbunden ist, über welchen die Raumtemperatur in einem Raum, beispielsweise dem Raum 16 des Gebäudes 12, ermittelbar ist. Es können auch mehrere solcher Temperaturfühler zur Ermittlung der Raumtemperaturen mehrerer Räume vorgesehen sein.

Es kann auch vorgesehen sein, dass ein Temperaturfühler 56 in dem Vorlauf 28 angeordnet ist und insbesondere in der Vorlaufsammelleitung 32 angeordnet ist, um eine Vorlauftemperatur zu ermitteln. Über eine Leitung 58 wird das Messergebnis an die Schnittstelleneinrichtung 36 weitergeleitet.

Entsprechend kann es vorgesehen sein, dass in dem Rücklauf 30 und insbesondere in der Rücklaufsammelleitung 34 ein Temperaturfühler 60 angeordnet ist, über welchen die Rücklauftemperatur ermittelbar ist. Mittels einer Leitung 62 lässt sich das Messergebnis an die Schnittstelleneinrichtung 36 übertragen.

Die Vorrichtung 10 ist beispielsweise als mobiles bzw. portables Gerät ausgebildet, welches sich an verschiedenen Einsatzorten einsetzen lässt.

Es kann vorgesehen sein, dass an die Schnittstelleneinrichtung 36 eine Windmesseinrichtung 64 über eine Leitung 66 gekoppelt ist. Über die Windmesseinrichtung 64 lässt sich insbesondere die Windgeschwindigkeit und die Windrichtung ermitteln.

Es können weitere Messeinrichtungen vorgesehen sein, über welche sich meteorologische Parameter wie Sonnenscheindauer, Bewölkung, Nebel, Niederschlagsart, Niederschlagsmenge, barometrischer Druck, Luftfeuchtigkeit usw. messen lassen und die entsprechenden Messdaten über die Schnittstelleneinrichtung 36 der Auswerteeinheit 48 zuführen lassen.

Es kann vorgesehen sein, dass an die Schnittstelleneinrichtung 36 eine Ermittlungseinrichtung 68 zur Ermittlung der Brauchwassermenge am Gebäude 12 über eine Leitung 70 gekoppelt ist. Es lassen sich dann entsprechende Informationen über die Brauchwassermenge der Auswerteeinheit 48 zuführen.

Es ist beispielsweise auch alternativ oder zusätzlich möglich, dass an der Vorrichtung 10 direkt die Brauchwasserentnahme charakterisierende Parameter eingebbar sind. Beispielsweise lässt sich die entnommene Warmwassermenge manuell kategorisieren. Mögliche Kategorien für entnommene Brauchwassermengen sind "gering", "unterdurchschnittlich", "durchschnittlich", "überdurchschnittlich".

Über die Vorrichtung 10 lässt sich der Heizwärmebedarf des Gebäudes 12 ermitteln und insbesondere der maximale Heizwärmebedarf ermitteln. Der maximale Heizwärmebedarf wird auch als Heizleistung bezeichnet. Der Wirkungsgrad bzw. Jahresnutzungsgrad eines Heizungssystems verschlechtert sich mit zunehmendem Verhältnis des Heizwärmebedarfs zum aktuellen Wärmebedarf. Beispielsweise liegt der Jahresnutzungsgrad überdimensionierter ölbefeuerter oder gasbefeuerter Zentralheizungen bei weniger als 60 %, während richtig dimensionierte Heizungssysteme einen Nutzungsgrad von mehr als 80 % aufweisen. Bei der Reduzierung einer Brennerleistung steigt der Wirkungsgrad des Heizungssystems beträchtlich. Dabei tritt jedoch die Gefahr auf, dass, wenn die Brennerleistung zu stark verkleinert wird, bei niedrigen Außentemperaturen der aktuelle Wärmebedarf nicht mehr abgedeckt werden kann und eine vorgegebene Raumtemperatur nicht mehr erreichbar ist. Bei einer Reduzierung der Brennerleistung sollte diese nicht so weit reduziert werden, als es dem Heizwärmebedarf entspricht.

Erfindungsgemäß wird ein Verfahren bereitgestellt, mit dem sich auf einfache und zuverlässige Weise der Heizwärmebedarf berechnen lässt.

Der Heizwärmebedarf des Gebäudes 12 ist bestimmt durch meteorologische Parameter, bei denen es sich insbesondere um die Außentemperatur bzw. den Unterschied zwischen der Außentemperatur und Raumtemperatur handelt, der zeitlichen Änderung der Außentemperatur, der Windgeschwindigkeit, der Sonnenscheindauer, der Bewölkung, ob Nebel vorliegt oder nicht, der Niederschlagsart und der Niederschlagsmenge. Ein Parameter, der den Heizwärmebedarf beeinflussen kann, ist auch der Brauchwasserverbrauch, d. h. der Warmwasserverbrauch, da Brauchwasser auch durch das Heizungssystem 14 aufgeheizt wird.

Es gibt noch weitere meteorologische Parameter wie der barometrische Druck, die zeitliche Änderung des barometrischen Drucks, die Luftfeuchtigkeit oder der NAO-Index, die keinen direkten Einfluss auf den Heizwärmebedarf haben, aber mit Parametern korreliert sind, die einen direkten Einfluss haben.

Weitere relevante Parameter, die einen Einfluss haben können, sind der Temperaturunterschied zwischen Tageshöchsttemperatur und Tagesmindesttemperatur, der Druckunterschied zwischen barometrischem Tageshöchstdruck und barometrischem Tagesmindestdruck und die Tageslänge. Die Tageslänge lässt sich insbesondere als Zeitdifferenz zwischen dem Zeitpunkt des Sonnenuntergangs und des Sonnenaufgangs ermitteln.

Erfindungsgemäß ist es vorgesehen, dass die Außentemperatur ermittelt wird und vorzugsweise die zeitliche Änderung der Außentemperatur ermittelt wird. Es wird weiterhin mindestens einer der Parameter Windgeschwindigkeit, Sonnenscheindauer und Brauchwasserverbrauch ermittelt. Dadurch lässt sich mit relativ geringem Zeitaufwand der Heizwärmebedarf zuverlässig ermitteln.

Es hat sich gezeigt, dass die zeitliche Änderung der Außentemperatur ein sehr relevanter Einflussparameter ist. Sie ist insbesondere wichtig bei Massivgebäuden mit Wänden, die eine hohe Wärmekapazität aufweisen und damit als Wärmespeicher funktionieren können. Bei Gebäuden in Leichtbauweise kann der Einfluss der zeitlichen Änderung der Außentemperatur geringer sein als bei Massivgebäuden.

Die Windgeschwindigkeit ist insbesondere bei schlecht isolierten Gebäuden ein relevanter Einflussparameter. Vor allem wenn Fenster bzw. Türen an dem entsprechenden Gebäude schlecht schließen, wird ein großer Einfluss dieses Parameters erwartet. Bei sehr guter Wärmedämmung des entsprechenden Gebäudes wird erwartet, dass der Einfluss der Windgeschwindigkeit auf den Heizwärmebedarf verringert ist.

Die Sonnenscheindauer kann bei Passivhäusern ein relevanter Einflussparameter sein. Beispielsweise kann der Heizwärmebedarf bei einem Passivhaus bei direkter Sonneneinstrahlung um bis zu 30 % niedriger liegen. Die Sonnenscheindauer als Einflussparameter wird als geringer erwartet, wenn die Südseite bzw. Westseite des Gebäudes 12 keine Fenster aufweist.

Die Bedeutung des Parameters Brauchwasserverbrauch wird als um so wichtiger erwartet, je besser die Wärmedämmung des Gebäudes 12 ist. Der Einfluss der Wasserzubereitung kann sehr hoch sein, wenn es sich bei dem Gebäude 12 um ein Niedrigenergiehaus handelt.

Die oben genannten Parameter oder eine Untermenge davon werden über an die Vorrichtung 10 angekoppelte Messeinrichtungen zeitabhängig gemessen und/oder sie werden über den oder die Anschlüsse 37 von einer oder mehreren Datenbanken beispielsweise eines Wetterdienstes abgefragt. Die Auswerteeinheit 48 kann dann den (Nenn-) Heizwärmebedarf berechnen.

Die entsprechenden Parameterwerte werden zeitlich beabstandet ermittelt, direkt vor Ort und/oder die entsprechenden zeitlichen Daten werden aus einer oder mehreren Datenbanken eingelesen. Die kleinste Zeiteinheit zur Berechnung des Heizwärmebedarfs ist dabei ein 24-Stunden-Tag. Es kann aber vorgesehen sein, dass während eines 24-Stunden-Tags mehrere Ermittlungen durchgeführt werden. Beispielsweise wird die Außentemperatur als mittlere Tagestemperatur ermittelt.

Die mittlere Tagestemperatur kann beispielsweise auch als Mittelwert einer Tageshöchsttemperatur und einer Tagestiefsttemperatur oder als Mittelwert von über einen Tag ermittelten Außentemperaturen bestimmt werden.

Ein Tag wird zur Berechnung des Heizwärmebedarfs nur dann herangezogen, wenn eine vorgegebene mittlere Tagestemperatur für den Tag oder für eine Gruppe von aufeinanderfolgenden Tagen, in denen der Tag liegt, unterschritten wird. Diese vorgegebene Temperatur liegt insbesondere unterhalb von 15°C.

Zur Berücksichtigung der zeitlichen Änderung der Außentemperatur (und gegebenenfalls der zeitlichen Änderung des barometrischen Drucks) werden bezogen auf einen Bezugstag ein oder mehrere Vortage berücksichtigt. Beispielsweise werden ein oder zwei Vortage des Bezugstags berücksichtigt. Dazu wird beispielsweise ein Parametermittelwert für den Bezugstag samt Vortagen ermittelt. Es kann dabei vorgesehen sein, dass dieser Parametermittelwert der Außentemperatur ungewichtet oder gewichtet ist. Im Falle der Gewichtung wird beispielsweise ein Tag mit einem größeren zeitlichen Abstand zu dem Bezugstag weniger stark gewichtet als ein Tag mit geringerem Abstand zu dem Bezugstag. Beispielsweise werden 2-Tage-Parametermittelwerte oder 3-Tage-Parametermittelwerte gebildet.

Der Parameter Brauchwasserverbrauch wird beispielsweise dadurch ermittelt, dass der Warmwasserverbrauch täglich gemessen wird. Es ist grundsätzlich aber auch möglich, dass ein Bediener der Vorrichtung 10 den Brauchwasserverbrauch abschätzende Eingaben direkt an der Vorrichtung 10 machen kann.

Es ist insbesondere vorgesehen, dass eine Parametermittlung über mehrere Tage durchgeführt wird und dabei für jeden Tag der Heizwärmebedarf ermittelt wird. Es wird dann der größte Heizwärmebedarf in dieser Ermittlungsserie als "tatsächlicher" Heizwärmebedarf genommen. Insbesondere wird eine Ermittlungsserie über mindestens drei Tage durchgeführt. Vorzugsweise umfasst die Ermittlungsserie mindestens sieben Tage.

Der Heizwärmebedarf (Heizleistung, Nennleistung, Nennwärmebedarf) wird berechnet aus

$$N = \Gamma \cdot H \, \Delta T_a / (\Delta t \cdot \Delta T_{g, \, mod}) \qquad (1),$$

wobei $\Gamma$ ein Brennstoffverbrauch im Zeitraum $\Delta t$ ist, H die Verbrennungswärme ist, und $\Delta T_{g, \, mod}$ ein Maß für die Differenz zwischen Raumtemperatur $T_{Raum}$ und Außentemperatur $T_{außen}$ ist, welche abhängig von dem bzw. den ermittelten Parametern ist. $\Delta T_a$ ist die Differenz zwischen Raumtemperatur und einer Auslegungstemperatur.

Bei dem Zeitintervall $\Delta t$ handelt es sich insbesondere um ein 24-Stunden-Intervall.

Die Auslegungstemperatur ist eine tiefe Außentemperatur, wobei erwartet ist, dass diese tiefe Außentemperatur nur in statistisch äußerst seltenen Ausnahmefällen für einen längeren Zeitraum unterschritten wird. Damit ist die Temperaturdifferenz $\Delta T_a$ eine Auslegungsdifferenz; sie kann beispielsweise festgesetzt werden auf 40 K, was der Differenz zwischen einer Raumtemperatur von 20°C und einer vorgegebenen tiefen Außentemperatur von -20°C entspricht.

In $\Delta T_{g, \, mod} = T_{raum} - T_{außen} + T_{mod} = \Delta T_g + T_{mod}$ geht die Außentemperatur ein. $T_{mod}$ ist eine parameterabhängige "Korrektur". Es kann zusätzlich auch eine Änderung der Außentemperatur berücksichtigt werden, indem in $T_{mod}$ die Differenz zwischen Raumtemperatur und Außentemperatur für mindestens zwei Tage berücksichtigt wird.

Die Größe $\Delta T_{g, \, mod}$ ist keine tatsächliche Temperaturdifferenz zwischen Raumtemperatur und Außentemperatur, sondern eine um $T_{mod}$ modifizierte Größe. $T_{mod}$ ist parameterabhängig. $T_{mod}$ ist insbesondere Null, wenn die Windgeschwindigkeit unterhalb einer bestimmten Schwelle, beispielsweise 1 m/s im Tagesdurchschnitt liegt, die Sonnenscheindauer Null ist, kein Niederschlag vorliegt und die Änderung der Außentemperatur im Vergleich zu mindestens einem Vortag Null ist. Der Korrekturanteil $T_{mod}$ berücksichtigt systematisch Einflussparameter wie Windgeschwindigkeit, Sonnenscheindauer, Brauchwasserverbrauch, Änderung der Außentemperatur, Windrichtung, Bewölkung, Nebel, Niederschlagsart, barometrischer Druck, zeitliche Änderung des barometrischen Drucks, Luftfeuchtigkeit, NAO-Index einzeln oder in Kombination.

Es gibt verschiedene Ansätze, $\Delta T_{g,\,mod}$ zu berechnen. Beispielsweise wird diese Größe als Summe einzelner Anteile angesetzt:

$$\Delta T_{g,\,mod} = \Delta T_g + T_{mod} = \Delta T_g + \sum_{k=1}^{m} \sum_{i=1}^{n} C_i^{(k)} T_i^{\,k} \quad (2)$$

In den individuellen Summanden $C_i^{(k)} T_i^{\,k}$ lassen sich ermittelte Parameter i wie Änderung der Außentemperatur, Brauchwasserverbrauch, Windstärke und Sonnenscheindauer berücksichtigen. n ist die Anzahl der Parameter i, die berücksichtigt werden, m ist die Anzahl von Potenzen in der Temperatur, die berücksichtigt werden.

Die Koeffizienten sind beispielsweise zuvor über Kalibrierungsmessungen bestimmt worden bzw. sind aus analytischen Zusammenhängen bekannt. Die Kalibrierungsmessungen müssen dabei nicht für jedes Gebäude individuell durchgeführt werden, sondern es genügt die Kenntnis von "globalen" Kalibrierungskoeffizienten beispielsweise für bestimmte Gebäudetypen und/oder bestimmte Gebäudelagen.

Kalibrierungsmessungen lassen sich mit der Vorrichtung 10 durchführen.

Es ist beispielsweise auch möglich, dass für $\Delta T_{g,\,mod}$ ein Produktansatz zu machen:

$$\Delta T_{g,\,mod} = \Delta T_g \cdot \prod_{i=1}^{n} C_i^{\,ai} \qquad (3).$$

Die Berechnung des Heizwärmebedarfs aus der Formel (2) ist günstiger, wenn zwischen den ermittelten Parametern und dem Heizwärmebedarf ein physikalisch eindeutig beschreibbarer Zusammenhang besteht. Ein solcher Einfluss liegt beispielsweise bei der Änderungen der Außentemperatur vor. Die Formel (3) ist günstiger, wenn der Zusammenhang nur einen statistischen Charakter hat. Dies ist beispielsweise der Fall beim Einfluss des barometrischen Drucks auf den Heizwärmebedarf. Beide Ansätze können auch kombiniert werden.

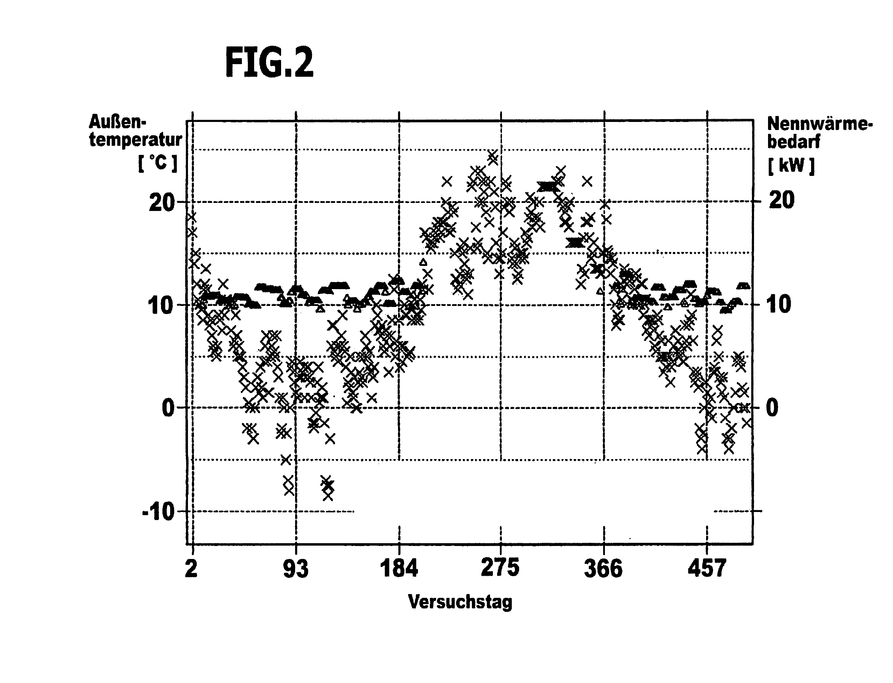

In Figur 2 ist ein Diagramm der Außentemperatur über eine Vielzahl von Versuchstagen gezeigt. (Der erste Versuchstag ist der 29. September 1999.)

Es wurde nur ein Bezugstag herangezogen, wenn an ihm und am Tag vorher die mittlere Tagestemperatur höchstens 14,5°C betragen hat.

Die Außentemperatur wurde für einen Bezugstag als mittlere Temperatur von insgesamt drei Tagen (zwei Vortage plus Bezugstag) genommen. Eingezeichnet ist mit Dreiecken der entsprechend ermittelte Nennwärmebedarf. Man sieht, dass die Streuung des Nennwärmebedarfs relativ gering ist. Es zeigt sich auch, dass beispielsweise eine Ermittlungsreihe von sieben Tagen ausreichend ist für eine zuverlässige Ermittlung des Nennwärmebedarfs.

Die Vorrichtung 10 ist eine Kalibrierungsvorrichtung, die eine Ermittlung der relevanten Parameter über längere Zeiträume (insbesondere über mehrere Tage) ermöglicht und damit eine Auswertung durch die Auswerteeinheit 48 ermöglicht. Über die Schnittstelleneinrichtung 36 lassen sich die für das entsprechende Messobjekt (das Gebäude 12) relevanten Parameter einlesen; die Parameter können direkt vor Ort durch Messung ermittelt sein und/oder sie können aus einer oder mehreren Datenbanken eingelesen werden.

Die Parameter können je nach Klimazone und Gebäudetyp unterschiedlich sein. Die Vorrichtung 10 erlaubt es, unterschiedliche Parametersätze einzulesen, um eine Anpassung an die spezielle Anwendung zu ermöglichen.

Die Auswerteeinheit 48 führt insbesondere eine mehrdimensionale Regression durch.

Bei einem Ausführungsbeispiel wird der Brennstoffverbrauch $\Gamma$ (siehe Gleichung (1) oben) ermittelt. $\Delta T_{g,\,mod}$ ist eine Funktion der oben erwähnten Parameter, die als $X_1, ..., X_n$ symbolisiert werden:

$$\Gamma = f(X_1, \ldots, X_n) = g(\Delta T_{g,\,mod}) \qquad (4)$$

Aus Gleichung (4) lässt sich $\Delta T_{g,\,mod}$ berechnen, wenn die Umkehrfunktion $g^{-1}$ zu der Funktion g, welche die Abhängigkeit des Brennstoffverbrauchs $\Gamma$ von $\Delta T_{g,\,mod}$ charakterisiert, bekannt ist:

$$\Delta T_{g,\,mod} = g^{-1}[f(X_1, \ldots, X_n)] \qquad (5)$$

Es kann beispielsweise ein linearer Regressionsansatz gewählt werden:

$$\Gamma = \sum_{i=1}^{n} a_i \, X_i = b \cdot \Delta T_{g,\,mod} \qquad (6)$$

Die Regressionskoeffizienten $a_i$ und der Faktor b sind unbekannt und über eine Regressionsanpassung zu ermitteln. Die Parameter $X_i$ sind aus Messungen oder Datenbanken bekannt.
Wenn die Gleichung (6) zugrunde gelegt wird, dann ergibt sich:

$$\Delta T_{g,\,mod} = \frac{1}{b} \sum_{i=1}^{n} a_i \, X_i \qquad (7)$$

Wenn für die Größe $X_1$ die Temperaturdifferenz $\Delta T_g$ zwischen der Außentemperatur und der Raumtemperatur gewählt wird, dann erhält man aus Gleichung (7):

$$\Delta T_{g,\,mod} = \frac{a_1}{b} \Delta T_g + \frac{1}{b} \sum_{i=2}^{n} a_i \, X_i \qquad (8)$$

Bei einem konkreten Ausführungsbeispiel wird ausgehend von der Gleichung (8) als Parameter $X_2$ der Unterschied der Außentemperatur des Messtags zum vorherigen Tag gewählt, als Parameter $X_3$ die Windgeschwindigkeit, als Parameter $X_4$ die Tageslänge und als Parameter $X_5$ die relativen Sonnenstunden als Verhältnis zwischen Sonnenstunden zu Tageslänge.

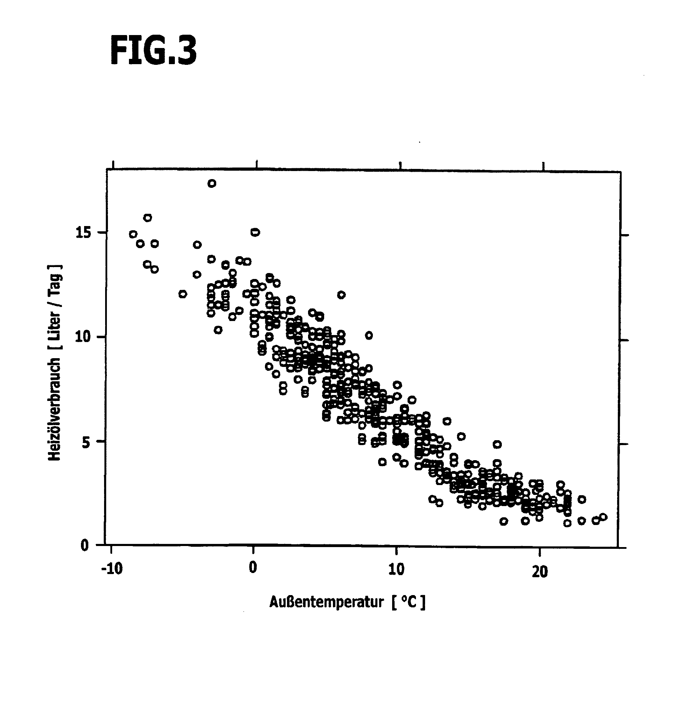

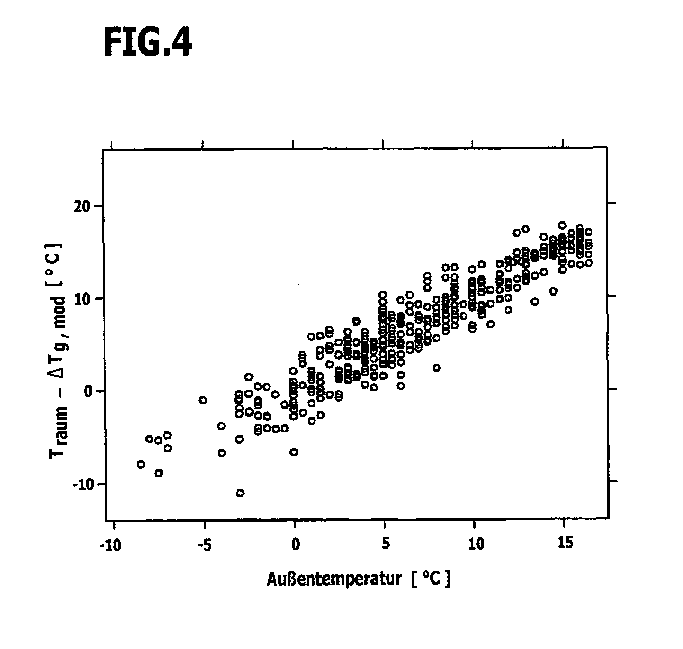

Die Figuren 3 und 4 zeigen das Ergebnis einer konkreten Messung und Auswertung. Figur 3 zeigt den Heizölverbrauch eines Heizungssystems eines Einfamilienhauses als Brennstoffverbrauch in Abhängigkeit von der Außentemperatur. Mit den Daten gemäß Figur 3 wurde eine Regressionsanpassung durchgeführt. Figur 4 zeigt die Größe $\Delta T_{g,\,mod}$ (bezogen auf die Raumtemperatur) in Abhängigkeit der Außentemperatur. Es ergaben sich folgende Regressionskoeffizienten, wenn b = 1 gewählt wurde:

$$a_1 = 0{,}510; \; a_2 = -0{,}065; \; a_3 = 0{,}036; \; a_4 = -0{,}793 \; und \; a_5 = -0{,}440.$$

Bei einem weiteren konkreten Ausführungsbeispiel wurden als Parameter (ausgehend von der Gleichung (8)) $X_2$ als Unterschied der Außentemperatur des Messtags zum vorherigen Tag, $X_3$ als Unterschied der Außentemperatur zum vorvorherigen Tag, $X_4$ als Temperaturunterschied zwischen Tageshöchsttemperatur und Tagesmindesttemperatur und als Parameter $X_5$ der Warmwasserverbrauch ermittelt. Auch hier wurde wiederum eine entsprechende Regressionsanpassung durchgeführt, die zu entsprechenden Regressionskoeffizienten führt.

Es ist auch möglich, dass mittels des erfindungsgemäßen Verfahrens ermittelt wird, ob eine Überdimensionierung des Heizungssystems 14 vorliegt. Dazu wird die Brennerleistung mit dem ermittelten Wärmebedarf verglichen. Je nach Ergebnis des Verhältnisses liegt eine Überdimensionierung oder gegebenenfalls sogar Unterdimensionierung vor. Durch Leistungsreduzierung bzw. Leistungssteigerung des Wärmeerzeugers des Heizungssystems 14 lässt sich dieses optimieren. Eine starke Überdimensionierung führt zu einer Verminderung des Wirkungsgrads bzw. des Jahresnutzungsgrads des Heizungssystems. Bei einer Unterdimensionierung ist keine ausreichende Heizleistung gewährleistbar.

Mit Hilfe der erfindungsgemäßen Lösung ist es auch möglich, eine Heizungsregelung zu realisieren. Die Heizungsregelung basiert dabei nicht auf der tatsächlichen Außentemperatur $T_{außen}$, sondern auf einer effektiven Außentemperatur $T_{a,\,eff}$. Die effektive Außentemperatur entspricht der Größe $\Delta T_{g,\,mod}$, wie oben eingeführt, ohne den Raumtemperaturanteil $T_{raum}$, das heißt:

$$T_{a,\,eff} = T_{raum} - \Delta T_{g,\,mod} \qquad (9)$$

Da die Raumtemperatur $T_{raum}$, wie sie oben eingeführt ist, eine feste Größe ist, kann die effektive Außentemperatur so ermittelt werden, wie oben anhand von $\Delta T_{g,\,mod}$ beschrieben. Insbesondere lassen sich nach entsprechender Anpassung die Gleichungen (4) bis (8) verwenden.

Wenn die Umkehrfunktion $g^{-1}$ bekannt ist bzw. bei einer konkreten Ausführungsform die Regressionskoeffizienten gemäß den Gleichungen (7) bzw. (8), dann lässt sich die effektive Außentemperatur ermitteln, wenn die Parameter $X_i$ ermittelt werden. Anstatt der tatsächlichen Außentemperatur lässt sich dann eine Heizungsregelung mit einer effektiven Temperatur durchführen, die wesentliche Einflussgrößen auf die Heizleistung berücksichtigt.

Insbesondere ist die Führungsgröße der Heizungsregelung die effektive Außentemperatur, mittels welcher die Heizungsvorlauftemperatur geregelt wird.

Die Heizungsvorlauftemperatur wird anhand der Heizkurve des Heizungssystems 14 und der effektiven Außentemperatur eingestellt. Die Heizkurve wird dabei nicht als Funktion der tatsächlichen Außentemperatur angesehen, sondern als Funktion der effektiven Außentemperatur. Grundsätzlich ist die Messung der tatsächlichen Außentemperatur mit einem Außentemperaturfühler relativ ungenau; insbesondere beeinflussen die Witterungsbedingungen das Messergebnis stark. Durch die Verwendung der effektiven Außentemperatur sind diese witterungsbedingten Einflüsse erfassbar.

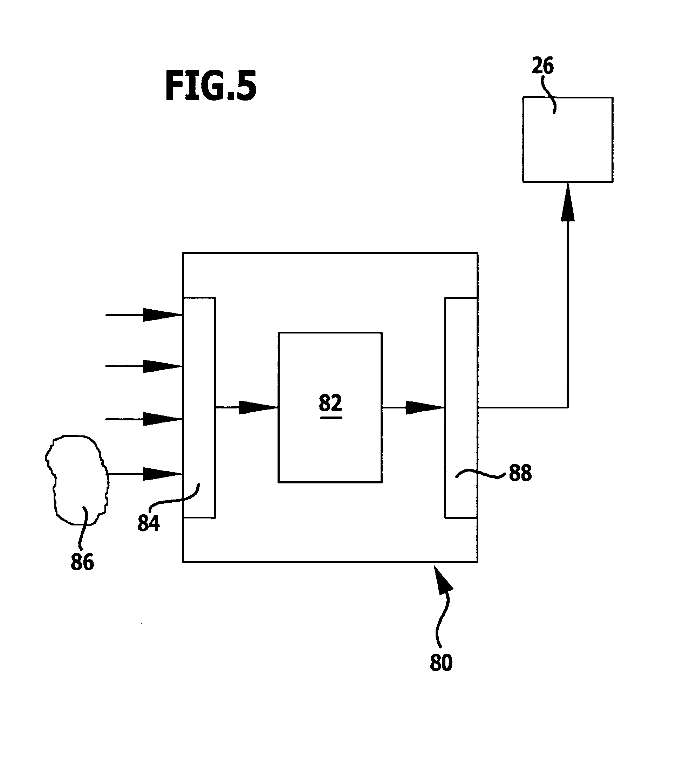

Zur Regelung ist eine Heizungsregelungsvorrichtung 80 vorgesehen, von der ein Ausführungsbeispiel in Figur 5 schematisch gezeigt ist. Diese Heizungsregelungsvorrichtung 80 umfasst eine Auswertungseinrichtung 82, welche die effektive Außentemperatur $T_{a,\,eff}$ berechnet. Die Heizungsregelungsvorrichtung 80 umfasst eine erste Schnittstelleneinrichtung 84, welcher Parameter $X_i$, welche zur Verwendung der effektiven Außentemperatur verwendet werden, zuführbar sind. Solche Parameter können aus Datenbanken, beispielsweise über das Internet 86, eingelesen werden und/oder von entsprechenden Messgeräten stammen. Bestimmte Parameter, wie beispielsweise die Tageslänge, können auf einfache Weise aus dem Kalendertag und den Ortskoordinaten des Heizungssystems 14 ermittelt werden und brauchen nicht direkt gemessen werden.

Die Heizungsregelungsvorrichtung 80 umfasst ferner eine zweite Schnittstelleneinrichtung 88, welche an die Wärmequelle 26 (insbesondere Brenner) des Heizungssystems 14 gekoppelt ist. Über die zweite Schnittstelleneinrichtung 88 übermittelt die Heizungsregelungsvorrichtung 80 die entsprechenden Signale zur Regelung der Heizungsvorlauftemperatur.

Die Auswertungseinrichtung 82 ermittelt als Führungsgröße für die Heizungsregelung beispielsweise basierend auf den Gleichungen (4) bis (8) die effektive Außentemperatur.

Die effektive Außentemperatur ist eine "gefühlte Temperatur", die die verschiedenen Faktoren berücksichtigen kann, die den Heizwärmebedarf außerhalb der Außentemperatur beeinflussen. Es lässt sich dadurch erreichen, dass im Vergleich zu einer reinen Außentemperatur geführten Regelung der Heizungsvorlauftemperatur auch am Anfang und am Ende einer Heizperiode eine angepasste Heizungsregelung erfolgt.

Mit der Heizungsregelungsvorrichtung 80 lassen sich auch vorhandene Heizungssysteme 14 nachrüsten.

Es ist auch noch möglich, dass über die Heizungsregelungsvorrichtung 80 und insbesondere die Auswertungseinrichtung 82 die Auslastung des Heizungssystems ermittelt wird. Die Auslastung ist definiert als das Verhältnis der Summe der Brennereinschaltzeiten in einem bestimmten Zeitraum bezogen auf die Länge dieses Zeitraums. Durch die Ermittlung der Auslastung kann man wichtige Informationen für die Wirkungsgradverbesserung erhalten.

Wenn die Auslastung des Heizungssystems 14 bekannt ist, dann kann die Größe $\Delta T_{g,\,mod}$ auch berechnet werden als

$$\Delta T_{g, \text{mod}} = (T_{\text{raum}} - T_{\text{außen}}) \bullet \text{Auslastung} \qquad (10)$$

bzw. die effektive Außentemperatur $T_{a, \text{eff}}$ kann berechnet werden als

$$T_{a, \text{eff}} = T_{\text{raum}} - (T_{\text{raum}} - T_{\text{außen}}) \bullet \text{Auslastung} \qquad (11)$$

Die genannten Größen können dann auf der Grundlage von Messungen ermittelt werden, welche in einem kurzen Zeitintervall, welcher sich beispielsweise über einen Tag erstreckt oder über einen kürzeren Zeitraum (wie 12 Stunden oder auch eventuell nur 6 Stunden) erhalten werden. Es sind dann, sofern die Auslastung bekannt ist, keine genauen Messungen vieler Parameter zur Ermittlung von Koeffizienten und insbesondere Regressionskoeffizienten notwendig.

Es ist auch möglich, dass die Heizkurve des Heizungssystems 14 als Funktion der Auslastung angesehen wird. Die Auslastung ist eine Funktion der effektiven Außentemperatur, da sie dieser genauer folgt als der tatsächlichen Außentemperatur.

Grundsätzlich ist es möglich, dass die Auslastung des Heizungssystems 14 aus Gleichung (4) bei bekanntem $\Delta T_{g, \text{mod}}$ berechnet wird, wenn der Brennstoffverbrauch $\Gamma$ als Funktion der Auslastung angesehen wird. $\Gamma$ ist das Produkt von Brennereinschaltzeit und Brennstoffmassenstrom für einen definierten Zeitraum. Der Brennstoffmassenstrom ist wiederum eine Größe, die grundsätzlich bekannt ist.

Eine weitere wichtige Information für eine mögliche Wirkungsgradverbesserung ist die durchschnittliche Einschaltzeit des Heizungssystems 14. Bei gleicher Brennerleistung und gleicher Auslastung können viele kurze Einschaltvorgänge und Ausschaltvorgänge ungünstiger sein als wenige Einschaltvorgänge und Ausschaltvorgänge; bei langen Einschaltzeiten bzw. Ausschaltzeiten ist üblicherweise der Nutzungsgrad verbessert und Abgasemissionen des Heizungssystems 14 lassen sich verringern. Die durchschnittliche Einschaltzeit wird von der Auswertungseinrichtung 82 als Summe der Brennereinschaltzeiten in einem bestimmten Zeitraum bezogen auf die Anzahl der Schaltungen in diesem Zeitraum ermittelt.

Die Heizungsregelungsvorrichtung 80 kann aufgrund der Ermittlung der effektiven Außentemperatur und der Ansteuerung der Wärmequelle 26 ermitteln, ob eine Überdimensionierung vorliegt. Ferner kann die Auslastung ermittelt werden und die Einschaltzeiten des Heizungssystems 14 angezeigt werden. Dadurch erhält ein Betreiber Informationen, wie der Wirkungsgrad des Heizungssystems 14 verbessert werden kann. Durch die Regelung basierend auf der effektiven Außentemperatur erhält man eine wirkungsvollere und komfortable Heizungsregelung.

## Patentansprüche

1. Verfahren zur Bestimmung des Heizwärmebedarfs eines Gebäudes mit einem Heizungssystem, bei dem zeitabhängige Parameter ermittelt werden, welche den Heizwärmebedarf beeinflussen oder mit Parametern, die den Heizwärmebedarf beeinflussen, korreliert sind, und aus den ermittelten Parametern der Heizwärmebedarf berechnet wird, wobei die Außentemperatur als Parameter, welcher den Heizwärmebedarf beeinflusst, ermittelt wird und in die Berechnung des Heizwärmebedarfs die Differenz zwischen Raumtemperatur und Außentemperatur eingeht, **dadurch gekennzeichnet , dass** mindestens einer der Parameter Windgeschwindigkeit, Sonnenscheindauer, Brauchwasserverbrauch, zeitliche Änderung der Außentemperatur, Auslastung des Heizungssystems zeitabhängig ermittelt wird und dass eine von dem mindestens einen Parameter und der Differenz zwischen Raumtemperatur und Außentemperatur abhängige Größe ($\Delta T_{g, \text{mod}}$) bestimmt wird, mit welcher der Heizwärmebedarf berechnet wird.

2. Verfahren nach Anspruch 1, **dadurch gekennzeichnet, dass** der Parameter Temperaturunterschied zwischen Tageshöchsttemperatur und Tagesmindesttemperatur zeitabhängig ermittelt wird und bei der Bestimmung der Größe ($\Delta T_{g, \text{mod}}$) berücksichtigt wird.

3. Verfahren nach Anspruch 1 oder 2, **dadurch gekennzeichnet, dass** der Parameter Druckunterschied zwischen barometrischem Tageshöchstdruck und barometrischem Tagesmindestdruck zeitabhängig ermittelt wird und bei der Bestimmung der Größe ($\Delta T_{g, \text{mod}}$) berücksichtigt wird.

4. Verfahren nach einem der vorangehenden Ansprüche, **dadurch gekennzeichnet, dass** der Parameter Tageslänge zeitabhängig ermittelt und bei der Bestimmung der Größe ($\Delta T_{g, \text{mod}}$) berücksichtigt wird.

5. Verfahren nach Anspruch 4, **dadurch gekennzeichnet, dass** die Tageslänge als Zeitdifferenz zwischen dem Zeitpunkt des Sonnenuntergangs und des Sonnenaufgangs ermittelt wird.

6. Verfahren nach einem der vorangehenden Ansprüche, **dadurch gekennzeichnet, dass** die zeitliche Änderung der Außentemperatur auf einen oder mehrere Vortage bezogen wird.

7. Verfahren nach einem der vorangehenden Ansprüche, **dadurch gekennzeichnet, dass** als Parameter die zeitliche Änderung der Außentemperatur zu einem Vortag und als mindestens einen weiteren Parameter die zeitliche Änderung der Außentemperatur zu einem anderen Vortag ermittelt wird und die Parameter bei der Ermittlung der Größe ($\Delta T_{g,\,mod}$) berücksichtigt werden.

8. Verfahren nach einem der vorangehenden Ansprüche, **dadurch gekennzeichnet, dass** mindestens einer der Parameter Windrichtung, Bewölkung, Nebel, Niederschlagsart, barometrischer Druck, zeitliche Änderung des barometrischen Drucks, Luftfeuchtigkeit und NAO-Index zeitabhängig ermittelt wird.

9. Verfahren nach einem der vorangehenden Ansprüche, **dadurch gekennzeichnet, dass** die Parameter vor Ort gemessen werden und/oder an einer oder mehreren Datenbanken abgefragt werden.

10. Verfahren nach einem der vorangehenden Ansprüche, **dadurch gekennzeichnet, dass** die kleinste Zeiteinheit zur Berechnung des Heizwärmebedarfs ein 24-Stunden-Tag ist.

11. Verfahren nach einem der vorangehenden Ansprüche, **dadurch gekennzeichnet, dass** ein Tag zur Berechnung des Heizwärmebedarfs nur dann herangezogen wird, wenn eine vorgegebene mittlere Tagestemperatur für den Tag oder für eine Gruppe von aufeinanderfolgenden Tagen, in denen der Tag liegt, unterschritten wird.

12. Verfahren nach einem der vorangehenden Ansprüche, **dadurch gekennzeichnet, dass** die Brauchwasserentnahme gemessen wird.

13. Verfahren nach einem der Ansprüche 1 bis 11, **dadurch gekennzeichnet, dass** die Brauchwasserentnahme abgeschätzt wird.

14. Verfahren nach einem der vorangehenden Ansprüche, **dadurch gekennzeichnet, dass** der Heizwärmebedarf nach einer Ermittlung von Parametern über mindestens einen Tag berechnet wird.

15. Verfahren nach Anspruch 14, **dadurch gekennzeichnet, dass** Parameter über mindestens zwei Tage ermittelt werden.

16. Verfahren nach Anspruch 14 oder 15, **dadurch gekennzeichnet, dass** Parameter über mindestens zehn Tage ermittelt werden.

17. Verfahren nach einem der vorangehenden Ansprüche, **dadurch gekennzeichnet, dass** zur Ermittlung einer zeitlichen Änderung eines Parameters bezogen auf einen Bezugstag die entsprechenden Parameter eines oder mehrerer Vortage berücksichtigt werden.

18. Verfahren nach Anspruch 17, **dadurch gekennzeichnet, dass** ein Parametermittelwert für den Bezugstag oder den oder die Vortage gebildet wird.

19. Verfahren nach Anspruch 18, **dadurch gekennzeichnet, dass** ein Zweitages-Parametermittelwert oder ein Dreitages-Parametermittelwert gebildet wird.

20. Verfahren nach einem der vorangehenden Ansprüche, **dadurch gekennzeichnet, dass** der Heizwärmebedarf (N) aus der Beziehung

$$N = \Gamma \cdot H\, \Delta T_a / (\Delta t \cdot \Delta T_{g,\,mod})$$

berechnet wird, wobei $\Gamma$ ein Brennstoffverbrauch einer Wärmequelle des Heizungssystems im Zeitintervall $\Delta t$ ist, H

die Verbrennungswärme ist, $\Delta T_{g, mod}$ ein Maß für die Differenz zwischen Raumtemperatur und Außentemperatur ist, welche abhängig von dem mindestens einen Parameter ist, und $\Delta T_a$ die Differenz ist zwischen der Raumtemperatur und einer vorgegebenen Auslegungstemperatur.

**21.** Verfahren nach Anspruch 20, **dadurch gekennzeichnet, dass** $\Delta T_{g, mod}$ die Differenz zwischen Raumtemperatur und Außentemperatur korrigiert um eine parameterabhängige Temperatur $T_{mod}$ ist.

**22.** Verfahren nach Anspruch 20 oder 21, **dadurch gekennzeichnet, dass** der Brennstoffverbrauch einen Anteil eines Brennstoffverbrauchs bei Standardbedingungen und einen Korrekturanteil aufweist, welcher mittels ermittelter Parameter bestimmt wird.

**23.** Verfahren nach einem der Ansprüche 20 bis 22, **dadurch gekennzeichnet, dass** der Einfluss der ermittelten Größen durch einen Faktor und/oder einen Summanden bezogen auf den Heizwärmebedarf bei Normalbedingungen berücksichtigt wird.

**24.** Verfahren nach einem der vorangehenden Ansprüche, **dadurch gekennzeichnet, dass** ein Brennstoffverbrauch ($\Gamma$) zeitabhängig ermittelt wird und eine Regressionsanpassung mittels mindestens zwei Parametern durchgeführt wird, bei welcher Regressionskoeffizienten bestimmt werden, und über die Regressionskoeffizienten und die Parameter die Größe ($\Delta T_{g, mod}$) ermittelt wird.

**25.** Verfahren nach Anspruch 24, **dadurch gekennzeichnet, dass** die mindestens zwei Parameter und der Brennstoffverbrauch mindestens näherungsweise zeitgleich ermittelt werden.

**26.** Verfahren nach Anspruch 24 oder 25, **dadurch gekennzeichnet, dass** eine lineare Regressionsanpassung durchgeführt wird.

**27.** Verfahren nach einem der vorangehenden Ansprüche, **dadurch gekennzeichnet, dass** eine Brennerleistung eines Brenners des Heizungssystems und der bestimmte Heizwärmebedarf verglichen werden, um zu prüfen, ob eine Überdimensionierung des Brenners vorliegt.

**28.** Verfahren nach einem der vorangehenden Ansprüche, **dadurch gekennzeichnet, dass** die Auslastung eines Heizungssystems als das Verhältnis der Summe von Brennereinschaltzeiten in einem bestimmten Zeitintervall zu der Länge des Zeitintervalls ermittelt wird.

**29.** Verfahren nach einem der vorangehenden Ansprüche, **dadurch gekennzeichnet, dass** eine durchschnittliche Einschaltzeit des Heizungssystems als das Verhältnis der Summe von Brennereinschaltzeiten in einem bestimmten Zeitraum zu der Anzahl der Schaltungen in diesem Zeitraum ermittelt wird.

**30.** Verfahren nach einem der vorangehenden Ansprüche, **dadurch gekennzeichnet, dass** die Größe ($\Delta T_{g, mod}$) bei bekannter Auslastung des Heizungssystems als $\Delta T_{g, mod} = (T_{raum} - T_{außen}) \cdot$ Auslastung ermittelt wird.

**31.** Verfahren zur Heizungsregelung, bei dem die Führungsgröße eine effektive Außentemperatur ($T_{a, eff}$) ist, welche mittels der tatsächlichen Außentemperatur und mittels mindestens einem der Parameter Windgeschwindigkeit, Sonnenscheindauer, Brauchwasserverbrauch, zeitliche Änderung der Außentemperatur oder Auslastung eines Heizungssystems berechnet wird.

**32.** Verfahren nach Anspruch 31, **dadurch gekennzeichnet, dass** mittels der Führungsgröße die Heizungsvorlauftemperatur geregelt wird.

**33.** Verfahren nach Anspruch 31 oder 32, **dadurch gekennzeichnet, dass** mindestens einer der Parameter Windgeschwindigkeit, Sonnenscheindauer, Brauchwasserverbrauch, zeitliche Änderung der Außentemperatur ermittelt wird und bei der Berechnung der effektiven Außentemperatur berücksichtigt wird.

**34.** Verfahren nach einem der Ansprüche 30 bis 33, **dadurch gekennzeichnet, dass** der Temperaturunterschied zwischen Tageshöchsttemperatur und Tagesmindesttemperatur ermittelt wird und bei der Bestimmung der effektiven Außentemperatur ($T_{a, eff}$) berücksichtigt wird.

**35.** Verfahren nach einem der Ansprüche 30 bis 34, **dadurch gekennzeichnet, dass** der Druckunterschied zwischen barometrischem Tageshöchstdruck und Tagesmindestdruck zeitabhängig ermittelt wird und bei der Berechnung der effektiven Außentemperatur ($T_{a,\,eff}$) berücksichtigt wird.

36. Verfahren nach einem der Ansprüche 30 bis 35, **dadurch gekennzeichnet, dass** der Parameter Tageslänge ermittelt und bei der Berechnung der effektiven Außentemperatur ($T_{a,\,eff}$) berücksichtigt wird.

37. Verfahren nach Anspruch 36, **dadurch gekennzeichnet, dass** die Tageslänge als Zeitdifferenz zwischen dem Zeitpunkt des Sonnenuntergangs und des Sonnenaufgangs ermittelt wird.

38. Verfahren nach einem der Ansprüche 30 bis 37, **dadurch gekennzeichnet, dass** die zeitliche Änderung der Außentemperatur auf einen oder mehrere Vortage bezogen wird.

39. Verfahren nach einem der Ansprüche 30 bis 38, **dadurch gekennzeichnet, dass** die zeitliche Änderung der Außentemperatur zu einem Vortag und als mindestens einen weiteren Parameter die zeitliche Änderung der Außentemperatur zu einem anderen Vortag ermittelt wird und diese Parameter bei der Berechnung der effektiven Außentemperatur ($T_{a,\,eff}$) berücksichtigt werden.

40. Verfahren nach einem der Ansprüche 30 bis 39, **dadurch gekennzeichnet, dass** mindestens einer der Parameter Windrichtung, Bewölkung, Nebel, Niederschlagsart, barometrischer Druck, zeitliche Änderung des barometrischen Drucks, Luftfeuchtigkeit und NAO-Index ermittelt wird.

41. Verfahren nach einem der Ansprüche 30 bis 40, **dadurch gekennzeichnet, dass** die Parameter vor Ort gemessen werden und/oder an einer oder mehreren Datenbanken abgefragt werden.

42. Verfahren nach einem der Ansprüche 30 bis 41, **dadurch gekennzeichnet, dass** die Brauchwasserentnahme gemessen wird.

43. Verfahren nach einem der Ansprüche 30 bis 41, **dadurch gekennzeichnet, dass** die Brauchwasserentnahme abgeschätzt wird.

44. Verfahren nach einem der Ansprüche 30 bis 43, **dadurch gekennzeichnet, dass** die effektive Außentemperatur ($T_{a,\,eff}$) die Differenz zwischen der tatsächlichen Temperatur und der Außentemperatur korrigiert um eine parameterabhängige Temperatur ($T_{mod}$) ist.

45. Verfahren nach einem der Ansprüche 30 bis 44, **dadurch gekennzeichnet, dass** die effektive Außentemperatur ($T_{a,\,eff}$) durch eine Regressionsanpassung mit mindestens zwei Parametern mit zugeordneten Regressionskoeffizienten bestimmt wird.

46. Verfahren nach Anspruch 45, **dadurch gekennzeichnet, dass** die Regressionskoeffizienten zeitlich konstant gewählt werden.

47. Verfahren nach Anspruch 45 oder 46, **dadurch gekennzeichnet, dass** die Regressionsanpassung linear ist.

48. Verfahren nach einem der Ansprüche 45 bis 47, **dadurch gekennzeichnet, dass** die Regressionskoeffizienten über einen Vergleich mit dem Brennstoffverbrauch ermittelt werden.

49. Verfahren nach einem der Ansprüche 30 bis 48, **dadurch gekennzeichnet, dass** die Auslastung eines Heizungssystems als das Verhältnis der Summe von Brennereinschaltzeiten in einem bestimmten Zeitintervall zu der Länge des Zeitintervalls ermittelt wird.

50. Verfahren nach einem der Ansprüche 30 bis 49, **dadurch gekennzeichnet, dass** eine durchschnittliche Einschaltzeit des Heizungssystems als das Verhältnis der Summe von Brennereinschaltzeiten in einem bestimmten Zeitraum zu der Anzahl der Schaltungen in diesem Zeitraum ermittelt wird.

51. Verfahren nach einem der Ansprüche 30 bis 50, **dadurch gekennzeichnet, dass** die effektive Außentemperatur ($T_{a,\,eff}$) bei bekannter Auslastung ermittelt wird als $T_{a,\,eff} = T_{raum} - (T_{raum} - T_{außen}) \cdot$ Auslastung.

52. Heizungsregelungsvorrichtung zur Durchführung des Heizungsregelungsverfahrens gemäß einem der Ansprüche 30 bis 51, umfassend eine Auswertungseinrichtung (82) zur Berechnung der effektiven Außentemperatur ($T_{a, eff}$), eine erste Schnittstelleneinrichtung (84), über welche die effektive Außentemperatur ($T_{a, eff}$) bestimmte Parameter ($X_1$, $X_2$, ...) einlesbar und der Auswertungseinrichtung (82) zuführbar sind, und eine zweite Schnittstelleneinrichtung (88), über welche ein oder mehrere Wärmequellen (26) ansteuerbar sind.

53. Heizungsregelungsvorrichtung nach Anspruch 52, **gekennzeichnet durch** eine oder mehrere Messeinrichtungen für Parameter ($X_1$, $X_2$, ...), welche die effektive Außentemperatur ($T_{a, eff}$) bestimmen, wobei die Messeinrichtung oder Messeinrichtungen an die erste Schnittstelleneinrichtung (84) angeschlossen sind.

54. Heizungsregelungsvorrichtung nach Anspruch 52 oder 53, **dadurch gekennzeichnet, dass** die erste Schnittstelleneinrichtung (84) an eine Datenbank angeschlossen ist oder so ausgebildet ist, dass sie an eine Datenbank anschließbar ist und die effektive Außentemperatur ($T_{a, eff}$) bestimmte Parameter ($X_1$, $X_2$) von der Datenbank einlesbar sind.

55. Heizungsregelungsvorrichtung nach Anspruch 54, **dadurch gekennzeichnet, dass** die erste Schnittstelleneinrichtung (84) an das Internet (86) angeschlossen ist oder anschließbar ist.

# FIG.1

# FIG.2

EP 1 777 465 A2

# FIG.3

# FIG.4

# FIG.5

26

82

84

86

88

80

**IN DER BESCHREIBUNG AUFGEFÜHRTE DOKUMENTE**

**In der Beschreibung aufgeführte Patentdokumente**

- EP 1215445 A2